(19) **Europäisches Patentamt**

**European Patent Office**

**Office européen des brevets**

(11) **EP 1 517 386 A2**

(12) **EUROPÄISCHE PATENTANMELDUNG**

(43) Veröffentlichungstag:
23.03.2005 Patentblatt 2005/12

(51) Int Cl.⁷: $H01M\ 4/02$, $H01M\ 4/40$, $H01M\ 4/50$, $H01M\ 4/52$, $H01M\ 10/40$

(21) Anmeldenummer: 04021890.1

(22) Anmeldetag: 15.09.2004

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **19.09.2003 DE 10345348**

(71) Anmelder: **VARTA Microbattery GmbH**
**30419 Hannover (DE)**

(72) Erfinder:
• **Holl, Konrad, Dr.**
**73434 Aalen-Dewangen (DE)**
• **Perner, Arno, Dr.**
**73479 Ellwangen (DE)**

• **Wagner, Horst**
**73494 Rosenberg (DE)**
• **Akca, Kemal**
**73479 Ellwangen (DE)**
• **Hennrich, Rolf**
**73479 Ellwangen (DE)**
• **Joas, Alfons**
**73497 Tannhausen (DE)**
• **Ilic, Dejan, Dr.**
**73479 Ellwangen (DE)**

(74) Vertreter: **Mütschele, Thomas, Dr. Dipl.-Chem.**
**Patentanwälte Ruff, Wilhelm**
**Beier, Dauster & Partner**
**Kronenstrasse 30**
**70174 Stuttgart (DE)**

(54) **Verfahren zur Herstellung eines wiederaufladbaren galvanischen Elements und ein solches Element**

(57)　Bei einem Verfahren zur Herstellung eines wieder aufladbaren galvanischen Elementes mit einer negativen Elektrode (3) aus einer Lithium-/Indium-Legierung und einer positiven, Lithium interkalierenden Elektrode (5) in einem Gehäuse (1) werden in das Gehäuse eine überwiegend aus Indium bestehende negative Elektrode und eine ungeladene positive Elektrode mit einer Li enthaltenden aktiven Masse und ein Elektrolyt eingebracht. Durch anschließende Formation des Elements wird eine negative Lithium-/Indium-Elektrode gebildet.

Die negative Elektrode besteht beispielsweise zu mindestens 90 Prozent aus Indium. Als positives Elektrodenmaterial kann eine $LiMO_x$ Masse mit M= Ni, Co, Mn verwendet werden, welche mit einem oder mehreren der Metalle Al, Ti, Mg, Zn, Cr dotiert sein kann.

EP 1 517 386 A2

## Beschreibung

Gegenstand der Erfindung ist ein Verfahren zur Herstellung eines wiederaufladbaren galvanischen Elements mit einer negativen Elektrode aus einer Lithium/Indium-Legierung und einer positiven, Lithium interkalierenden Elektrode in einem Gehäuse sowie ein solches galvanisches Element.

Wiederaufladbare galvanische Elemente mit Lithium als negatives Elektrodenmaterial sind in verschiedenen Ausführungsformen bekannt. Die negative Elektrode besteht in solchen Elementen oft aus Lithium/Aluminium-Legierungen oder Lithium/Indium-Legierungen.

Die DE 38 16 199 A1 beispielsweise beschreibt, wie eine negative Elektrode dabei als Zwei-Schicht-Elektrode ausgebildet ist und aus einer Schicht einer Lithium-/Aluminium-Legierung und einer Schicht Aluminium besteht. Als positive Elektrode wird ein sogenanntes $LiMO_x$-Material verwendet, üblicherweise in Oxid-Form. Dabei kann üblicherweise M = Co, Ni, Mn sein mit eventuellen Dotierungen, wie z. B. Al, Ti, Mg, Zn, Cr usw. Die als negatives aktives Material dienenden Lithium-Legierungen müssen in einem aufwendigen Herstellungsprozeß hergestellt werden, beispielsweise durch Hochtemperatursynthese unter Schutzgasatmosphäre und Druck. Diese Synthese ist sehr zeitaufwendig und kostenintensiv.

## Aufgabe und Lösung

Der Erfindung liegt die Aufgabe zugrunde, ein Herstellungsverfahren für ein galvanisches Element mit negativer Elektrode aus einer Lithium/Indium-Legierung und einer positiven, Lithium interkalierenden Elektrode zu schaffen, wobei das Herstellungsverfahren einfach sein soll.

Diese Aufgabe wird gelöst durch ein Verfahren mit den Merkmalen des Anspruchs 1 sowie ein galvanisches Element mit den Merkmalen des Anspruchs 6. Vorteilhafte oder bevorzugte Ausgestaltungen der Erfindung sind in den weiteren Ansprüchen angegeben und werden im folgenden näher beschrieben. Der Wortlaut der Ansprüche wird durch ausdrückliche Bezugnahme zum Inhalt der Beschreibung gemacht.

Da die in der positiven Elektrode eingesetzten Materialien, nämlich $LiMO_x$, wobei M = Co, Ni, Mn mit eventuellen Dotierungen wie z. B. Al, Ti, Mg, Zn, Cr usw. ungeladen sind, wandern bei der Formation bzw. beim ersten Ladeschritt die Lithium-Ionen aus der positiven Elektrode zur negativen Indiumelektrode. Dort scheidet sich das Lithium ab und bildet eine Lithium-Indiumlegierung. Dies kann insbesondere eine Lithium-Indiumbeschichtung sein. Dieser Vorgang kann beispielsweise so beschrieben werden:

$$LiMO_x + Iny \leftrightarrow Li_{1-z}MO_x + Li_zIn_y$$

Dieser Vorgang weist eine hervorragende Reversibilität und eine hohe Energiedichte auf.

Das hier beschriebene System kann in Zellen mit organischem flüssigen Elektrolyten, wie z. B. Lithiumknopfzellen, Lithiumrundzellen, Lithiumwickelzellen verwendet werden. Ebenso kann es in Zellen mit einem Festkörper- oder Polymerelektrolyt verwendet werden, wie z. B. Lithiumpolymerbatterien.

Diese und weitere Merkmale gehen außer aus den Ansprüchen auch aus der Beschreibung und der Zeichnung hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränkt die unter diesen gemachten Aussagen nicht in ihrer Allgemeingültigkeit.

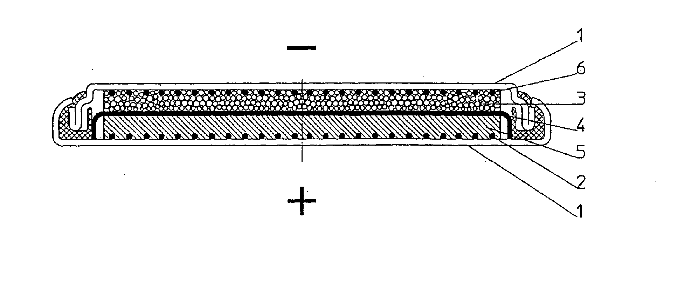

Im folgenden ist die Erfindung näher erläutert, insbesondere am Beispiel der Herstellung eines wiederaufladbaren Elements in Form einer Knopfzelle, die in der Fig. 1 schematisch dargestellt ist.

## Detaillierte Beschreibung des Ausführungsbeispiels

Erfindungsgemäß wird in das Zellengehäuse 1 eine ungeladene positive Elektrode 5 mit einem Ableiternetz 2 aus Edelstahl oder Aluminium eingebracht. Diese Elektrode 5 enthält als aktives Material ein Material mit einer Lithium-Phase bzw. ein Material, in welchem Lithium eingelagert ist. Dies ist beispielsweise $LiMO_x$, wobei M = Co, Ni oder Mn mit eventuellen metallischen Dotierungen wie z. B. Al, Ti, Mg, Zn, Cr usw ist.

Weiterhin enthält das Zellengehäuse 1 einen organischen Flüssigelektrolyten mit einem lithiumhaltigen Leitsalz ($LiPF_6$, $LiClO_4$, $LiBF_4$ usw.), einen Festkörperelektrolyten (z. B. Zeolithe) oder einen Polymerelektrolyten (z. B. PEO, PVDF, PAN). Gegebenenfalls können noch ein Separator 4 (beispielsweise aus PP, PE, PTFE, PVDF) und eine negative Elektrode 3 mit Indium (Indiumelektrode), die eingesetzt wird als Folie oder - wie in der Fig. 1 dargestellt - als Pulver, enthalten sein. Das Pulver kann mit üblichen Bindern (PVDF, PTFE usw.) und Leitruß vermischt sein. Die negative Indiumelektrode kann sich auch auf einem Ableiternetz 6 befinden. Die in das Zellengehäuse eingebrachte negative Elektrode enthält einen hohen Prozentsatz an Indium, insbesondere höher als 70 %, vorteilhaft zumindest 90 %, besonders vorteilhaft zumindest 99 % Indium.

Der so hergestellte Lithiumakkumulator besitzt eine ungeladene positive Elektrode 5 und eine negative Indiumelektrode 3. Diese Indiumelektrode hat im Vergleich zu einer üblichen negativen Graphitelektrode eine höhere spezifische Kapazität (Graphit: 372 mAh/g), die bis zu der dreifach höheren spezifischen Kapazität gehen kann. Dadurch sind in einem derartigen Lithium-Ionenakkumulator deutlich höhere Energiedichten möglich.

Außerdem ist ein Lithiumakkumulator mit negativer Elektrode mit hohem Indium-Anteil wesentlich einfacher herzustellen. Die Indiumelektrode 3 kann als dünne Folie oder als Pulver, gegebenenfalls mit üblichen Bindern wie z. B. PTFE oder PVDF, in das Zellengehäuse eingebracht werden. Es ist keine aufwendige Anodenrezeptur oder Synthese notwendig wie im Falle von Legierungselektroden.

Zur erfindungsgemäßen Herstellung einer Knopfzelle (Abmessungen:

Durchmesser: 20mm; Höhe: 2,5mm) wird als negative Elektrode eine 100 µm dicke Indium-Folie mit 16 mm Durchmesser unter Normalatmosphäre in ein Ableiternetz aus Edelstahl in einen Knopfzellendeckel eingepresst. Das Indium kann dabei auch in Pulverform mit einem Leitmaterial wie MCMB (Mesocarbon Microbeads) gemischt und bspw. in Tablettenform eingesetzt werden. Das Indium bzw. die es enthaltende Mischung kann auch auf ein entsprechendes Ableiternetz beschichtet sein und als beschichtete Folie in die Zelle eingebracht werden. Die aus den Abmessungen berechnete Kapazität der negativen Elektrode beträgt 500 mAh/g.

Anschließend wird ein PP-Separator auf das Indium abgelegt, zum Beispiel Celgard2500® , und ein Vlies, zum Beispiel KodoshiP334® .

Für den Elektrolyten kann ein Lösungsmittelgemisch aus zyklischem Carbonat (z. B. Ethylencarbonat) und offenkettigem Carbonat (z. B. Diethylcarbonat) mit einem Mischungsverhältnis von 1:1 bis zu 2:8 verwendet werden, je nach Anwendung. Als Leitsalz wird Lithiumhexafluorophosphat im Elektrolyten gelöst.

Für die positive Elektrode wird $LiCoO_2$ das mit üblichen Bindern (PVDF, PTFE) und Leitruß versetzt ist, auf ein Al-Ableiternetz beschichtet (90 % $LiCoO_2$, 4 % Ruß, 6 % Binder). Die positive Elektrode wird in Tablettenform ausgestanzt (400-600 mg) und mit Elektrolyt getränkt in den Zellenbecher des Zellengehäuses eingelegt. Der Deckel und der Becher werden zusammengeführt und die Zelle verschlossen. Die komplettierte Zelle wird anschließend bis 4,2 V mit 1 C geladen. Dabei bedeutet 1 C an einem Beispiel erläutert, daß bei einer Kapazität der Zelle von 0,5 Ah das 1 C den 0,5 A entspricht. Dieser Wert ist ein sogenannter Praxiswert, der nicht wissenschaftlich definiert ist, aber in der Praxis häufig verwendet wird.

Bei diesem Formations- bzw. Ladeschritt bildet sich die negative Lithium-Indiumlegierung. Das Lithium in der positiven Elektrode wandert dabei zur negativen Elektrode und bildet auf dem Indium eine Beschichtung bzw. Legierung.

Bildung der Lithium/Indium -Legierung bei der Formation:

$$Li_{(A+B)}CoO_2 + In_n <-> Li_{(A)}CoO_2 + Li_{(B)}In_n$$

Mit dieser Rezeptur kann eine Batterie hergestellt wird, die bei 100 % Entladetiefe (Depth of Discharge=DOD) 150 Zyklen oder bei 20 % Entladetiefe 850 Zyklen erreicht bei deutlich höheren Energiedichten als mit Graphitelektroden.

**Patentansprüche**

1. Verfahren zur Herstellung eines wiederaufladbaren galvanischen Elements mit einer negativen Elektrode (3) aus einer Lithium-/Indium-Legierung und einer positiven, Lithium interkalierenden Elektrode (5) in einem Gehäuse (1), **dadurch gekennzeichnet, daß** eine überwiegend Indium aufweisende negative Elektrode (3), eine ungeladene positive Elektrode mit einer Lithium enthaltenden aktiven Masse und ein Elektrolyt in das Gehäuse (1) eingebracht werden, und daß durch anschließende Formation des Elements eine negative Lithium-/Indium-Elektrode gebildet wird.

2. Verfahren nach Anspruch 1, **dadurch gekennzeichnet, daß** die negative Elektrode (3) zu mindestens 70 Prozent, vorzugsweise zu mindestens 90 Prozent, aus Indium besteht.

3. Verfahren nach Anspruch 1 oder 2, **dadurch gekennzeichnet, daß** die negative Elektrode (3) zu mindestens 95 Prozent aus Indium besteht.

4. Verfahren nach einem der vorhergehenden Ansprüche, **dadurch gekennzeichnet, daß** die positive Elektrode (5) mit der Lithium enthaltenden aktiven Masse ein Element M aus der folgenden Gruppe aufweist:

   Ni, Co, Mn,

   wobei insbesondere die Masse mit dem Element M in der Form $LiMO_x$ verwendet wird.

5. Verfahren nach Anspruch 4, **dadurch gekennzeichnet, daß** die $LiMO_x$ Masse mit wenigstens einem der Metalle aus der folgenden Gruppe dotiert ist:

   Al, Ti, Mg, Zn, Cr.

6. Wiederaufladbares galvanisches Element mit einer negativen Elektrode aus einer Lithium-/Indium-Legierung und einer positiven, Lithium interkalierenden Elektrode (5) in einem Gehäuse (1), **dadurch gekennzeichnet, daß** es gemäß dem Verfahren nach einem der Ansprüche 1 bis 5 hergestellt ist.